# EUROPEAN PATENT APPLICATION

(11) **EP 4 480 767 A1**
(43) Date of publication of application: **25.12.2024**
(21) Application number: 24751358.3
(22) Date of filing: 08.01.2024
(51) Int. Cl.: B60T 8/171, B60T 8/172

(54) **BRAKING SYSTEM, CONTROL DEVICE, AND ELECTRIC VEHICLE**

(30) Priority: 05.05.2023 CN 202310495117
(71) Applicant: Huawei Digital Power Technologies Co., Ltd., Shenzhen, Guangdong 518043 (CN)
(72) Inventor: TANG, Jiayu, Shenzhen Guangdong 518043 (CN); HUANG, Chongxi, Shenzhen Guangdong 518043 (CN); NI, Hui, Shenzhen Guangdong 518043 (CN)
(74) Representative: Maiwald GmbH
(86) International application number: PCT/CN2024/071214
(87) International publication number: WO 2024/230224

(57) **Abstract**

This application provides a braking system, a control apparatus, and an electric vehicle. The braking system includes a controller and four actuators. Each actuator includes a brake disc. The braking system is configured to adjust, based on temperatures of four brake discs, braking force output by the four actuators. The controller is configured to control an actuator corresponding to a brake disc with a too high temperature to reduce braking force output, or is configured to control an actuator corresponding to a brake disc with a too low temperature to increase braking force output. The braking system provided in this application can prevent the brake disc from operating in a range with a too high or too low temperature. The control apparatus provided in this application can adjust, based on the temperatures of the four brake discs, braking force output by a drive system and the braking system. The control apparatus provided in this application can improve braking performance of the electric vehicle, and a running life and operating reliability of the braking system.

## Description

### TECHNICAL FIELD

This application relates to the field of braking systems of electric vehicles, and in particular, to a braking system, a control apparatus, and an electric vehicle.

### BACKGROUND

Braking performance of an electric vehicle greatly affects safety and comfort of the electric vehicle. Currently, braking methods of the electric vehicle mainly include friction braking and feedback braking. The friction braking means that a braking system of the electric vehicle directly outputs braking force, and the feedback braking means that a drive motor of the electric vehicle is in a power generation state and outputs braking force to a wheel of the electric vehicle during braking of the electric vehicle. Cooperation between the feedback braking and mechanical braking is a hot issue of concern. In addition, a temperature of a brake disc of the braking system of the electric vehicle greatly affects reliability and braking performance of the braking system. If the temperature of the brake disc is too high or too low, the braking performance of the braking system deteriorates, and running life is shortened.

### SUMMARY

To resolve a problem that braking performance, reliability, and service life of a brake disc are affected when the brake disc operates in a range with a too high or too low temperature, this application provides a braking system, a control apparatus, and an electric vehicle.

According to a first aspect, this application provides a braking system for an electric vehicle. The braking system includes a controller and four actuators. Each actuator includes a brake disc, four brake discs include two front brake discs and two rear brake discs, the two front brake discs include a left front brake disc and a right front brake disc, and the two rear brake discs include a left rear brake disc and a right rear brake disc. The controller is configured to receive a braking signal of the braking system and output four control signals. The braking signal of the braking system indicates total braking force of the braking system, and the four control signals are respectively used to control the four actuators to output braking force. The braking system is configured to adjust, based on temperatures of the four brake discs, the braking force output by the four actuators. The four control signals are used to control an actuator corresponding to a brake disc whose temperature is less than or equal to a first preset value to increase braking force output, where a sum of the braking force output by the four actuators is equal to the total braking force indicated by the braking signal of the braking system. The four control signals are used to control an actuator corresponding to a brake disc whose temperature is greater than or equal to a second preset value to reduce braking force output, where a sum of the braking force output by the four actuators is equal to the total braking force indicated by the braking signal of the braking system.

The braking system provided in the application can adjust the braking force output of the actuator based on the temperature of the brake disc. If a brake disc is overheated, braking force output of an actuator corresponding to the brake disc is reduced. In this case, friction on the overheated brake disc is reduced, and a temperature rise speed of the brake disc is slowed down. If a temperature of a brake disc is too low, braking force output corresponding to the brake disc is increased. In this case, friction on the brake disc with the too low temperature is increased, and the temperature of the brake disc rapidly increases. The braking system provided in this application can prevent the temperature of the brake disc from being too low or too high by controlling the friction on the brake disc, to improve braking performance of the electric vehicle and service life and reliability of the brake disc.

In an implementation of the first aspect, actuators corresponding to the two front brake discs are front actuators. The controller outputs the four control signals to increase braking force output of the front actuator in response to a temperature of at least one front brake disc being less than or equal to the first preset value. The controller outputs the four control signals to reduce braking force output of the front actuator in response to a temperature of at least one front brake disc being greater than or equal to the second preset value.

In an implementation of the first aspect, actuators corresponding to the two rear brake discs are rear actuators. The controller outputs the four control signals to control the rear actuator to increase the braking force output in response to a temperature of at least one rear brake disc being less than or equal to the first preset value. The controller outputs the four control signals to control the rear actuator to reduce the braking force output in response to a temperature of at least one rear brake disc being greater than or equal to the second preset value.

In an implementation of the first aspect, the left front brake disc and the right rear brake disc respectively correspond to a left front actuator and a right rear actuator. The controller is configured to control the left front actuator and the right rear actuator to increase the braking force output in response to a temperature of the left front brake disc or the right rear brake disc being less than or equal to the first preset value. The controller outputs the four control signals to control the left front actuator and the right rear actuator to reduce the braking force output in response to a temperature of the right front brake disc or the left rear brake disc being greater than or equal to the second preset value.

In an implementation of the first aspect, the right front brake disc and the left rear brake disc respectively correspond to a right front actuator and a left rear actuator. The controller outputs the four control signals to control the right front actuator and the left rear actuator to increase the braking force output in response to the temperature of the right front brake disc or the left rear brake disc being less than or equal to the first preset value. The controller outputs the four control signals to control the right front actuator and the left rear actuator to reduce the braking force output in response to the temperature of the right front brake disc or the left rear brake disc being less than or equal to the second preset value.

When braking force output by one actuator of the braking system suddenly change, the braking force output by the four actuators of the electric vehicle is different in magnitude. In this case, a vehicle body of the electric vehicle is unstable, and the electric vehicle has a risk of slipping and rollover. Therefore, when the temperature of the brake disc of the electric vehicle is abnormal, the braking system provided in this application simultaneously changes braking force output by two front actuators, or simultaneously changes braking force output by two rear actuators, or simultaneously changes braking force output by two diagonal actuators, to improve stability of the vehicle body of the electric vehicle in a braking process.

According to a second aspect, this application provides a control apparatus for an electric vehicle. The electric vehicle includes a drive system, and the drive system includes at least one drive motor and at least one motor controller. The motor controller is configured to control the drive motor to output driving force in response to the electric vehicle running in a driving state. The motor controller is configured to control the drive motor to output braking force to a wheel connected to the drive motor in response to the electric vehicle running in a braking state. The electric vehicle includes a braking system, the braking system includes four actuators, each actuator includes a brake disc, the four actuators are configured to output the braking force, four brake discs include two front brake discs and two rear brake discs, the two front brake discs include a left front brake disc and a right front brake disc, and the two rear brake discs include a left rear brake disc and a right rear brake disc. The control apparatus outputs a control signal of the drive system to control the drive system to reduce braking force output in response to a temperature of a brake disc corresponding to at least one wheel connected to the drive motor being less than or equal to a first preset value. The motor controller is configured to receive the control signal of the drive system and control the drive motor to reduce the braking force output. The control apparatus outputs a control signal of the drive system to control the drive system to increase braking force output in response to a temperature of a brake disc corresponding to at least one wheel connected to the drive motor being greater than or equal to a second preset value. The motor controller is configured to receive the control signal of the drive system and control the drive motor to increase the braking force output.

In an implementation of the second aspect, the drive system includes a front-drive motor, and the front-drive motor is connected to two front wheels of the electric vehicle. The control apparatus controls the drive system to reduce the braking force output in response to a temperature of at least one front brake disc being less than or equal to the first preset value; or the control apparatus controls the drive system to increase the braking force output in response to a temperature of at least one front brake disc being greater than or equal to the second preset value.

In an implementation of the second aspect, the drive system includes a rear-drive motor, and the rear-drive motor is connected to two rear wheels of the electric vehicle. The control apparatus controls the drive system to reduce the braking force output in response to a temperature of at least one rear brake disc being less than or equal to the first preset value; or the control apparatus controls the drive system to increase the braking force output in response to a temperature of at least one rear brake disc being greater than or equal to the second preset value.

In an implementation of the second aspect, the drive system includes four drive motors, and the four drive motors are respectively connected to four wheels of the electric vehicle. The control apparatus is configured to control the drive system connected to the wheel corresponding to the brake disc whose temperature is less than or equal to the first preset value to reduce the braking force output; or the control apparatus is configured to control the drive system connected to the wheel corresponding to the brake disc whose temperature is greater than or equal to the second preset value to increase the braking force output.

In an implementation of the second aspect, the control apparatus is configured to receive a vehicle braking signal and output a control signal of the braking system, the vehicle braking signal indicates total braking force output by the drive system and the braking system, the control signal of the braking system includes four actuator control signals, and the four actuator control signals are respectively used to control the four actuators to output the braking force. The control apparatus is configured to adjust, based on temperatures of the four brake discs when the electric vehicle runs in the braking state, braking force output by the drive system and the braking system. A sum of the braking force output by the drive system and the braking system is equal to the total braking force indicated by the vehicle braking signal.

The control apparatus provided in this application controls the braking force output of the drive system by outputting the control signal of the drive system. When the temperature of the brake disc corresponding to the wheel connected to the drive motor is too high, the braking force output by the drive system is increased. However, because the sum of the braking force output by the drive system and the braking system is specific, the braking force output by the braking system is reduced, friction on the brake disc of the electric vehicle is also reduced, and a temperature rise speed of the brake disc is reduced. This prevents a problem like braking performance deterioration of the braking system caused by a too high temperature of the brake disc. When the temperature of the brake disc corresponding to the wheel connected to the drive system is too low, the braking force output by the drive system is reduced, the braking force provided by the corresponding braking system is increased, the friction on the brake disc of the electric vehicle is also increased, and the temperature rise speed of the brake disc is increased, so that the brake disc operates in a range with a higher friction coefficient. Therefore, the control apparatus provided in this embodiment of this application can improve the braking performance of the electric vehicle, and improve service life and reliability of the brake disc.

In an implementation of the second aspect, actuators corresponding to the two front brake discs are front actuators. The control apparatus controls the front actuator to increase the braking force output in response to the temperature of the at least one front brake disc being less than or equal to the first preset value; or the control apparatus controls the front actuator to reduce the braking force output in response to the temperature of the at least one front brake disc being greater than or equal to the second preset value.

In an implementation of the second aspect, actuators corresponding to the two rear brake discs are rear actuators. The control apparatus controls the rear actuator to increase the braking force output in response to the temperature of the at least one rear brake disc being less than or equal to the first preset value; or the control apparatus controls the rear actuator to reduce the braking force output in response to the temperature of the at least one rear brake disc being greater than or equal to the second preset value.

In an implementation of the second aspect, the control apparatus is configured to control an actuator corresponding to the brake disc whose temperature is less than or equal to the first preset value to increase the braking force output; or the control apparatus is configured to control an actuator corresponding to the brake disc whose temperature is greater than or equal to the second preset value to reduce the braking force output.

In an implementation of the second aspect, the right front brake disc and the left rear brake disc respectively correspond to a right front actuator and a left rear actuator. The control apparatus is configured to control the right front actuator and the left rear actuator to increase the braking force output in response to a temperature of the right front brake disc or the left rear brake disc being less than or equal to the first preset value; or the control apparatus is configured to control the right front actuator and the left rear actuator to reduce the braking force output in response to a temperature of the right front brake disc or the left rear brake disc being less than or equal to the second preset value.

The control apparatus provided in this application can adjust the braking force output of the actuator based on the temperature of the brake disc. If a brake disc is overheated, the control apparatus controls the actuator corresponding to the brake disc to reduce the braking force output. In this case, friction on the overheated brake disc is reduced, and a temperature rise speed of the brake disc is slowed down. If a temperature of a brake disc is too low, the control apparatus controls the an actuator corresponding to the brake disc increase the braking force output. In this case, friction on the brake disc with the too low temperature is increased, and the temperature of the brake disc rapidly increases. The braking system provided in this application can prevent the temperature of the brake disc from being too low or too high by controlling the friction on the brake disc, to improve braking performance of the electric vehicle and service life and reliability of the brake disc.

According to a third aspect, this application provides an electric vehicle. The electric vehicle includes the braking system according to the first aspect or includes the control apparatus according to the second aspect. Beneficial effect of the electric vehicle provided in the third aspect of this application is beneficial effect of the braking system provided in the first aspect of this application or beneficial effect of the control apparatus provided in the second aspect of this application. Details are not described herein again.

### BRIEF DESCRIPTION OF DRAWINGS

FIG. 1 is a schematic diagram of a friction coefficient of a brake disc changing with a temperature;
FIG. 2 is a schematic diagram of an electric vehicle according to an embodiment of this application;
FIG. 3 is a schematic diagram of a braking system according to an embodiment of this application;
FIG. 4 is a schematic diagram of a braking system according to an embodiment of this application;
FIG. 5 is a schematic diagram of a drive system according to an embodiment of this application;
FIG. 6 is a schematic diagram of running of a drive system according to an embodiment of this application;
FIG. 7 is a schematic diagram of a control architecture of a braking system according to an embodiment of this application;
FIG. 8 is a schematic diagram of another control architecture of a braking system according to an embodiment of this application;
FIG. 9 is a schematic diagram of running of a braking system according to an embodiment of this application; and
FIG. 10 is a schematic diagram of a control apparatus according to an embodiment of this application.

### DESCRIPTION OF EMBODIMENTS

The following describes technical solutions in specific implementations of this application with reference to accompanying drawings in the implementations. Before specific content of the technical solutions is described, terms used in this application are first briefly described.

The words "first, second, third, or the like" or similar terms such as a module A, a module B, and a module C in the specification and claims are only used to distinguish between similar objects, and do not represent a specific order for objects. It can be understood that a specific order or sequence may be exchanged if allowed, so that embodiments of this application described herein can be implemented in an order other than that illustrated or described herein.

The term "include" used in the specification and claims should not be construed as being limited to the content listed below; and the term does not exclude other elements or steps. Accordingly, it should be interpreted as specifying the presence of the feature, whole, step or component mentioned, but does not preclude the presence or addition of one or more other features, wholes, steps or components and groups thereof. Therefore, the expression "device including apparatuses A and B" should not be limited to device consisting of only components A and B.

"One embodiment" or "an embodiment" mentioned in this specification means that a specific feature, structure, or characteristic described in combination with this embodiment is included in at least one embodiment of this application. Therefore, the term "in one embodiment" or "in an embodiment" appearing throughout this specification does not necessarily refer to a same embodiment, but may refer to a same embodiment. Further, in one or more embodiments, the particular features, structures, or characteristics can be combined in any suitable manner, as will be apparent to a person of ordinary skill in the art from the present disclosure.

Unless otherwise defined, all technical and scientific terms used in this specification have same meanings as that usually understood by a person skilled in the art of this application. In case of any inconsistency, the meaning described in this specification or the meaning obtained based on the content recorded in this specification shall be used. In addition, the terms used in this specification are merely for the purpose of describing embodiments of this application, but are not intended to limit this application.

With rapid development of electric vehicle technologies, people impose increasingly high requirements on driving comfort, operability and safety, and a braking system is given more responsibilities and obligations. The braking system provides braking force for a wheel of an electric vehicle. Currently, the braking system of the electric vehicle includes an electro-mechanical braking system and an electro-hydraulic braking system.

A drive system of the electric vehicle is configured to: when the electric vehicle runs in a driving state, provide driving force for the electric vehicle; or when the electric vehicle runs in a braking state, convert kinetic energy of the electric vehicle into electric energy to charge a power battery, and provide braking force for the electric vehicle. The drive system of the electric vehicle includes a drive motor and a motor controller. The drive motor is in transmission connection with the wheel of the electric vehicle through a transmission apparatus. When the electric vehicle is in a driving state, the drive system is configured to convert kinetic energy of the electric vehicle into electric energy, and torque output by the drive motor is transferred to the wheel through the transmission apparatus, to drive the wheel to run. When the electric vehicle is in a braking state, the drive system is configured to convert kinetic energy of the electric vehicle into electric energy. The drive motor runs in a power generation mode, and the drive motor absorbs kinetic energy of the wheel to generate power. The motor controller converts an alternating current generated by the drive motor into a direct current to charge the power battery of the electric vehicle.

In a braking process of the electric vehicle, the braking system and the drive system cooperate with each other to provide the braking force for the wheel of the electric vehicle.

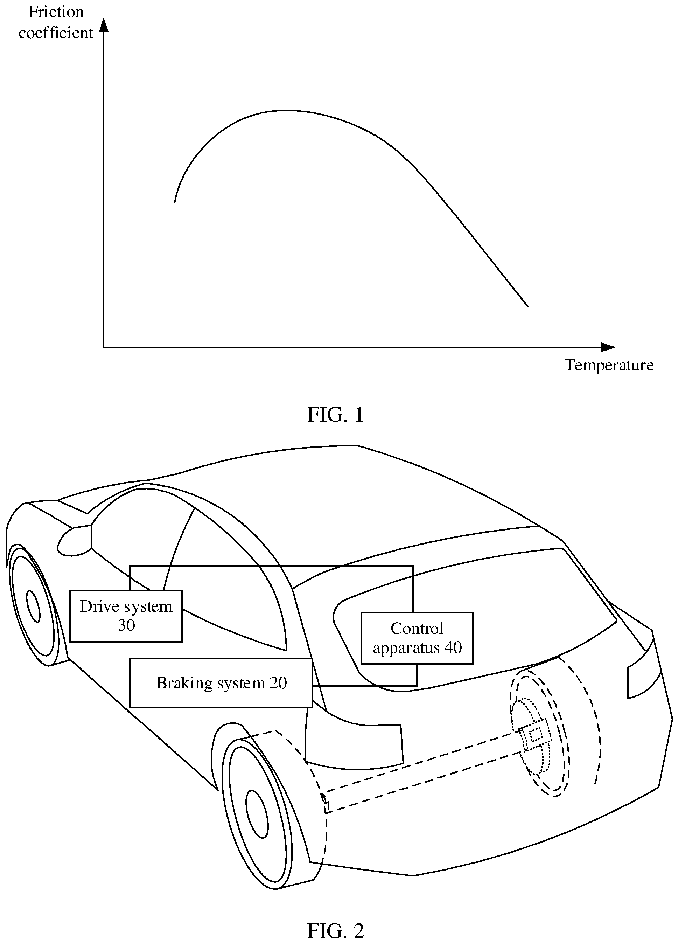

The braking system includes a brake disc. The brake disc is mounted on the wheel of the electric vehicle. When the electric vehicle is in a braking state, an actuator of the braking system provides the braking force for the electric vehicle through friction on the brake disc. When the braking system exerts the braking force on the brake disc, a friction coefficient of the brake disc greatly affects braking effect of the mechanical braking system. A higher friction coefficient of the brake disc enables better braking effect of the braking system. The friction coefficient of the brake disc is closely related to a temperature of the brake disc. FIG. 1 is a schematic diagram of a relationship between the temperature of the brake disc and the friction coefficient of the brake disc. As shown in FIG. 1, if the temperature of the brake disc is too high or too low, the friction coefficient of the brake disc is reduced, thereby affecting braking effect and braking accuracy of the braking system. In addition, too high or too low temperature of the brake disc has great negative impact on service life and reliability of the brake disc itself. For example, when the brake disc runs in a high temperature state, thermal attenuation occurs in the braking system. The thermal attenuation of the braking system refers to a phenomenon that braking force of the braking system is attenuated after a high temperature is generated due to strong friction between the brake disc and a brake pad. The braking performance of the braking system in a high heat condition is greatly weakened. If the temperature exceeds the limit, a braking failure occurs.

In a braking process, the temperature of the brake disc is directly related to the braking force of the braking system on the brake disc. Greater braking force of the braking system on the brake disc enables greater friction on the brake disc, and higher heat production efficiency of work done by the friction in the braking process enables a faster temperature rise speed of the brake disc. Greater braking force of the braking system on the brake disc enables smaller friction on the brake disc, and less heat production of work done by the friction in the braking process enables a slower temperature rise speed of the brake disc.

Based on this, to enable the brake disc to operate in a temperature range with a higher friction coefficient and to improve braking performance and reliability of the automobile braking system, embodiments of this application provide a braking system, a control apparatus, and an electric vehicle.

FIG. 2 is a schematic diagram of an electric vehicle 10 according to an embodiment of this application. The electric vehicle 10 includes a braking system 20, a drive system 30, and a control apparatus 40. The braking system 20 and the drive system 30 are configured to output braking force when the electric vehicle 10 runs in a braking state.

The electric vehicle 10 includes a wheel 11, and the wheel 11 includes a front wheel 111 and a rear wheel 112. The front wheel 111 includes a left front wheel 1111 and a right front wheel 1112, and the rear wheel 112 includes a left rear wheel 1121 and a right rear wheel 1122.

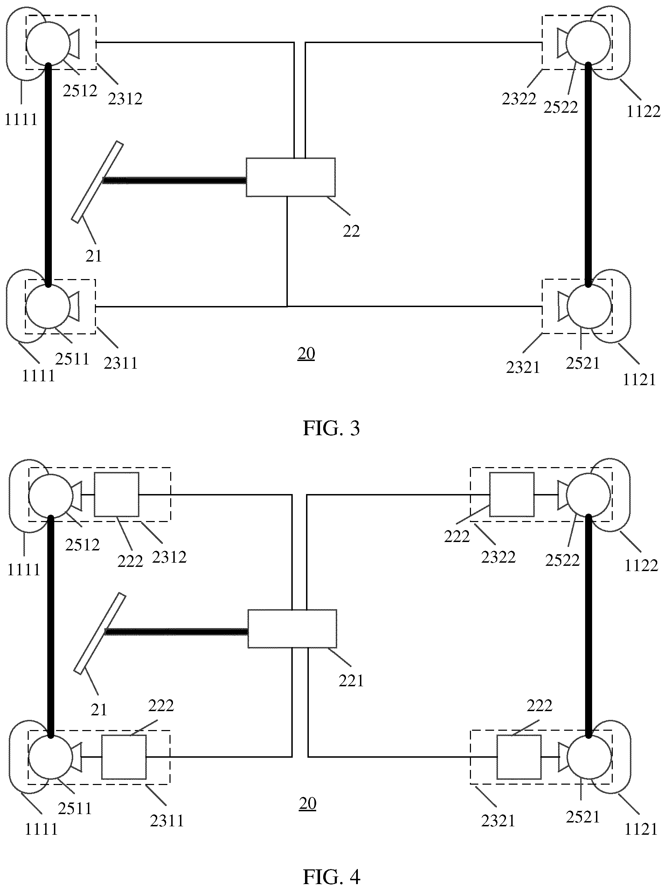

FIG. 3 is a schematic diagram of a braking system according to an embodiment of this application. As shown in FIG. 3, the braking system 20 includes a controller 22 and four actuators 23, and each actuator includes a brake disc 25.

The controller 22 is configured to receive a braking signal 50 of the braking system and output four control signals 60. The braking signal 50 of the braking system indicates total braking force of the braking system, and the four control signals 60 are respectively used to control the four actuators 23 to output braking force. Four brake discs 25 include two front brake discs 251 and two rear brake discs 252, the two front brake discs 251 include a left front brake disc 2511 and a right front brake disc 2512, and the two rear brake discs 25 include a left rear brake disc 2521 and a right rear brake disc 2522. Actuators corresponding to the left front brake disc 2511, the right front brake disc 2512, the left rear brake disc 2521, and the right rear brake disc 2522 are respectively a left front actuator 2311, a right front actuator 2312, a left rear actuator 2321, and a right rear actuator 2322. The left front actuator 2311 and the right front actuator 2312 form a front actuator 231, and the left rear actuator 2321 and the right rear actuator 2322 form a rear actuator 232.

In an embodiment, the braking system 20 is an electro-hydraulic brake-by-wire system (EHB). The controller 22 is an electronic control unit (ECU) 221, and each actuator 23 includes a brake slave cylinder 232 and a brake 234. When the electric vehicle 10 runs in a braking state, the electronic control unit (ECU) 221 receives the braking signal 50 of the braking system and outputs the four control signals 60. The four control signals 60 are used to control the four actuators 23 to output braking force.

In an embodiment, the braking system 20 is an electro-mechanical braking system (EMB). The controller 22 is an electronic control unit (ECU), and each actuator 23 includes a brake motor 235, a brake motor controller 236, and a brake 234. The electronic control unit (ECU) 222 receives the braking signal 50 of the braking system, and the electronic control unit (ECU) 221 controls, based on the braking signal of the braking system and a temperature of the brake disc 12, a voltage of a control current output by four brake motor controllers 236, to control the four brake motors 235 to apply different braking force to the four brake discs 12.

In an embodiment, the braking system 20 is a centralized control braking system. As shown in FIG. 3, the controller 22 is configured to receive the braking signal 50 of the braking system and directly output the four control signals 60 to the four actuators 23. In an embodiment, the braking system 20 is a distributed control braking system. As shown in FIG. 4, the controller 22 includes a central controller 221 and four actuator controllers 222. The central controller 221 is configured to receive a braking signal 50 of the braking system, and the four actuator controllers 222 are configured to receive instructions of the central controller 221 and output the four control signals 60 to control braking force output of the four actuators 23.

In an embodiment, the braking system 20 includes a sensor module 26, a brake pedal 27, and a pedal simulator 28. The sensor module 26 includes a temperature sensor, a vehicle speed sensor, and a pedal travel sensor. The pedal simulator 28 is configured to generate the braking signal 50 of the braking system based on a sensor signal from the sensor module 26. The braking signal 50 of the braking system indicates total braking force needed for braking of the electric vehicle.

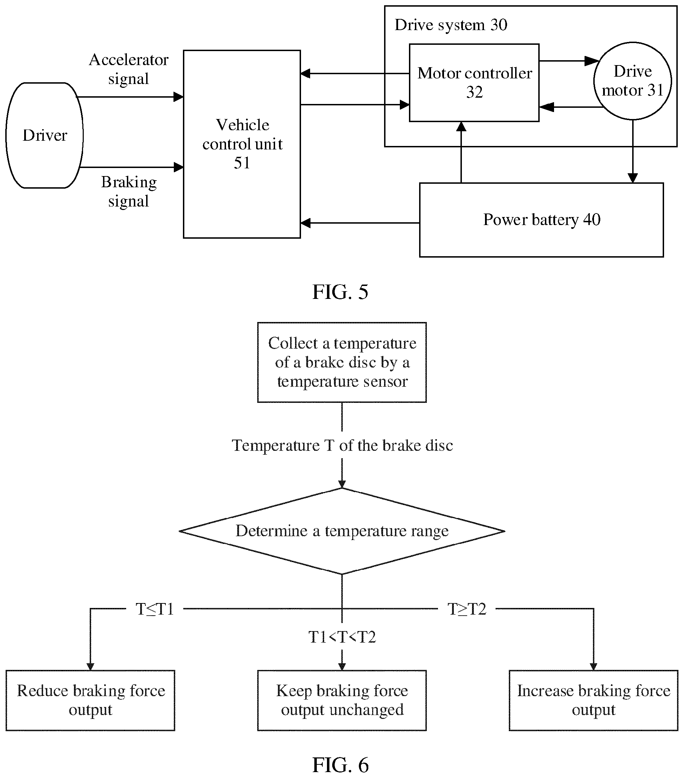

FIG. 5 is a schematic diagram of a drive system 30 according to an embodiment of this application. As shown in FIG. 4, the drive system 30 includes a drive motor 31 and a drive motor controller 32. The drive system 30 has different forms based on different driving methods of the electric vehicle 10. In an embodiment, the electric vehicle 10 is a front-drive electric vehicle, the drive motor 31 is a front-drive motor, and the drive motor 31 is in transmission connection with two front wheels 111 of the electric vehicle 10. When the electric vehicle 10 is in a driving state, the drive motor 31 outputs torque to the two front wheels 111. In an embodiment, the electric vehicle 10 is a rear-drive electric vehicle, the drive motor 31 is a rear-drive motor, and the drive motor 31 is in transmission connection with two rear wheels 112 of the electric vehicle 10. When the electric vehicle 10 is in a driving state, the drive motor 31 outputs torque to the two rear wheels 112. In an embodiment, the electric vehicle 10 is a four-drive electric vehicle, and the drive system 30 includes a front-drive front motor 311 and a rear-drive motor 312. The front-drive motor 311 is in transmission connection with two front wheels 111 of the electric vehicle, and the rear-drive motor 312 is in transmission connection with two rear wheels 112 of the electric vehicle. When the electric vehicle 10 is in a driving state, the front-drive motor 311 outputs torque to the two front wheels 111, and the rear-drive motor 312 outputs torque to the two rear wheels 112. In an embodiment, the drive system 30 is a distributed drive system. The drive system 30 includes four drive motors 31. The four drive motors 31 are respectively in transmission connection with four wheels 11 of the electric vehicle 10. When the electric vehicle 10 is in a driving state, the four drive motors 31 are respectively configured to output torque to the four wheels 11.

When the electric vehicle is in a driving state, the drive motor 31 is configured to provide driving force for the electric vehicle 10. Specifically, the drive motor 31 receives power supply of the power battery 40 of the electric vehicle 10 through the motor controller 32, and outputs torque to drive the electric vehicle 10. When the electric vehicle 10 is in a braking state, the drive motor 31 is configured to provide braking force for the electric vehicle 10. Specifically, the drive motor 31 runs in a power generation state, the drive motor 31 converts kinetic energy of the wheel 11 of the electric vehicle into electric energy, and outputs reverse torque to the wheel 11 of the electric vehicle 10, to provide the braking force for the electric vehicle 10. The drive system 30 provided in this embodiment of this application can provide the driving force for the electric vehicle, and can also convert the kinetic energy of the electric vehicle 10 into the electric energy when the electric vehicle 10 runs in the braking state, to improve energy utilization efficiency of the electric vehicle 10 and prolong an endurance mileage of the electric vehicle.

FIG. 6 is a schematic diagram of running of the drive system 30 when the electric vehicle 10 is in a braking state. As shown in FIG. 5, T is a temperature of a brake disc 25 corresponding to the wheel 11 driven by the drive system 30, T1 is a first preset value, and T2 is a second preset value. The drive system 30 reduces braking force output in response to a temperature of a brake disc 25 corresponding to at least one wheel 11 connected to the drive motor 31 being less than or equal to the first preset value. The drive system 30 keeps braking force output unchanged in response to a temperature of a brake disc 25 corresponding to at least one wheel 11 connected to the drive motor 31 being greater than the first preset value and the temperature of the brake disc 25 corresponding to the at least one wheel 11 connected to the drive motor 31 being less than the second preset value. The drive system 30 increases braking force output in response to a temperature of a brake disc 25 corresponding to at least one wheel 11 connected to the drive motor 31 being greater than or equal to the second preset value.

In an embodiment, the electric vehicle 10 is a front-drive electric vehicle, and the drive system 30 includes a front-drive motor 311. When the electric vehicle 10 is in a driving state, the front-drive motor 311 is configured to provide driving force for the two front wheels 111 of the electric vehicle 10. When the electric vehicle 10 is in a braking state, the front-drive motor 311 is configured to provide braking force for the two front wheels 111 of the electric vehicle 10.

In an embodiment, the electric vehicle 10 is a rear-drive electric vehicle, and the drive system 30 includes a rear-drive motor 312. When the electric vehicle 10 is in a driving state, the rear-drive motor 312 is configured to provide driving force for the two rear wheels 112 of the electric vehicle 10. When the electric vehicle 10 is in a braking state, the rear-drive motor 312 is configured to provide braking force for the two rear wheels 112 of the electric vehicle 10.

In an embodiment, the electric vehicle 10 is a four-drive electric vehicle, and the drive system 30 includes a front-drive motor 311 and a rear-drive motor 312. When the electric vehicle 10 is in a driving state, the front-drive motor 311 is configured to provide driving force for the two front wheels 111 of the electric vehicle 10, and the rear-drive motor 312 is configured to provide driving force for the two rear wheels 112 of the electric vehicle 10. When the electric vehicle 10 is in a braking state, the front-drive motor 311 is configured to provide braking force for the two front wheels 111 of the electric vehicle 10, and the rear-drive motor 312 is configured to provide braking force for the two rear wheels 112 of the electric vehicle 10.

In an embodiment, the drive system 30 is a distributed drive system. The drive system 30 includes four drive motors 31. When the electric vehicle 10 is in a driving state, the four drive motors 31 respectively provide driving force for the four wheels 11 of the electric vehicle 10. When the electric vehicle 10 is in a braking state, the four drive motors 31 respectively provide braking force for the four wheels 11 of the electric vehicle 10.

In this embodiment of this application, the braking system 20 is configured to adjust, based on temperatures of the four brake discs 25, braking force output by the four actuators 23. The controller 22 is configured to output four control signals to control an actuator 23 corresponding to the brake disc 25 whose temperature is less than or equal to the first preset value to increase the braking force output, where a sum of the braking force output by the four actuators 23 is equal to total braking force indicated by the braking signal 50 of the braking system. The controller 22 is configured to output four control signals to control an actuator 23 corresponding to the brake disc 25 whose temperature is greater than or equal to the second preset value to reduce the braking force output, where a sum of the braking force output by the four actuators 23 is equal to total braking force indicated by the braking signal 50 of the braking system.

Specifically, when the electric vehicle 10 is in a braking state, a temperature sensor 261 disposed on the brake disc 25 is configured to collect temperatures of the four brake discs 25, a speed sensor 262 disposed on the wheel 11 is configured to collect a driving speed of the electric vehicle 10, a pedal travel sensor 263 is configured to collect a trip of a brake pedal 27, and a brake pedal simulator 28 generates the braking signal 50 of the braking system based on the trip of the brake pedal 27 and the driving speed of the electric vehicle 10. The controller 22 receives the braking signal 50 of the braking system and receives a temperature signal of the brake disc from the temperature sensor 261. The controller 22 adjusts, based on the temperatures of the four brake discs 25, the four output control signals 60 to control the braking force output by the four actuators 23. The four control signals 60 are used to control the four actuators 23 to increase the braking force output of the actuator 23 corresponding to the brake disc 25 whose temperature is less than or equal to the first preset value, or the four control signals 60 are used to control the actuator 23 corresponding to the brake disc 25 whose temperature is greater than or equal to the second preset value to reduce the braking force output.

For example, a first preset temperature is 0 degrees Celsius. If a temperature of a brake disc is -20 degrees Celsius in a braking process of the electric vehicle, the control signal is used to increase braking force output by an actuator corresponding to the brake disc.

For example, a second preset temperature is 300 degrees Celsius. If a temperature of a brake disc is 400 degrees Celsius in a braking process of the electric vehicle, the control signal is used to reduce braking force output by an actuator corresponding to the brake disc.

For example, a second preset temperature value is 300 degrees Celsius, and temperatures of a left front brake disc 121, a right front brake disc 122, a left rear brake disc 123, and a right rear brake disc 124 are respectively 300 degrees Celsius, 310 degrees Celsius, 60 degrees Celsius, and 100 degrees Celsius in a braking process of the electric vehicle 10. Temperatures of the left front brake disc 121 and the right front brake disc 122 are greater than the second preset temperature value, and the braking system 20 reduces friction braking force on a left front wheel 111 and a right front wheel 112.

The braking system 20 provided in this embodiment of this application can adjust the braking force output of the actuator 23 based on the temperature of the brake disc 25. If a brake disc 25 is overheated, braking force output of an actuator 23 corresponding to the brake disc is reduced. In this case, friction on the overheated brake disc 25 is reduced, and a temperature rise speed of the brake disc 25 is slowed down. If a temperature of a brake disc 23 is too low, braking force output of an actuator 23 corresponding to the brake disc 25 is increased. In this case, friction on the brake disc with the too low temperature is increased, and the temperature of the brake disc rapidly increases. The braking system provided in this application can prevent the temperature of the brake disc from being too low or too high by controlling the friction on the brake disc, to improve braking performance of the electric vehicle and service life and reliability of the brake disc.

In an embodiment, the controller 22 is configured to output the four control signals 60 to control the front actuator 231 to increase the braking force output in response to a temperature of at least one front brake disc 251 being less than or equal to the first preset value. In an embodiment, the controller 22 is configured to output the four control signals to control the front actuator 231 to reduce the braking force output in response to a temperature of at least one front brake disc 251 being greater than or equal to the second preset value.

Specifically, when the temperature of the at least one front brake disc 251 is less than or equal to the first preset value, the controller 22 is configured to control the front actuator 231 to increase the braking force output. The sum of the braking force output by the four actuators 23 is equal to the total braking force indicated by the braking signal 50 of the braking system. Therefore, when braking force output by the current actuator 231 is increased, braking force output by the rear actuator 232 is accordingly reduced. When the temperature of the at least one front brake disc 25 is greater than or equal to the second preset value, the controller 22 is configured to control the front actuator 231 to reduce the braking force output and control the rear actuator 232 to increase the braking force output.

For example, a first preset temperature is 0 degrees Celsius. If a temperature of the left front brake disc 2511 is -20 degrees Celsius in a braking process of the electric vehicle 10, the controller 22 is configured to output the four control signals 60 to control the front actuator 231 to increase the braking force output.

For example, a second preset temperature is 300 degrees Celsius. If a temperature of the left front brake disc 2511 is 500 degrees Celsius in a braking process of the electric vehicle 10, the controller 22 is configured to output the four control signals 60 to control the front actuator 231 to reduce the braking force output.

In an embodiment, the controller 22 is configured to output the four control signals 60 to control the rear actuator 232 to increase the braking force output in response to a temperature of at least one rear brake disc 25 being less than or equal to the first preset value. In an embodiment, the controller 22 is configured to output the four control signals 60 to control the rear actuator 232 to reduce the braking force output in response to a temperature of at least one rear brake disc 25 being greater than or equal to the second preset value.

Specifically, when the temperature of the at least one rear brake disc 25 is less than or equal to the first preset value, the controller 22 is configured to control the rear actuator 23 to increase the braking force output. The sum of the braking force output by the four actuators 23 is equal to the total braking force indicated by the braking signal 50 of the braking system. Therefore, braking force output by the front actuator 231 is increased. When the temperature of the at least one rear brake disc 25 is greater than or equal to the second preset value, the controller 22 is configured to control the rear actuator 232 to reduce the braking force output and control the front actuator 231 to increase the braking force output.

For example, a first preset temperature is 0 degrees Celsius. If a temperature of the left rear brake disc 2522 is -20 degrees Celsius in a braking process of the electric vehicle 10, the control signal 60 is used to increase the braking force output of the rear actuator 232.

For example, a second preset temperature is 300 degrees Celsius. If a temperature of the left rear brake disc 2521 is degrees Celsius in a braking process of the electric vehicle 10, the controller 22 is configured to reduce the braking force output of the rear actuator 232.

In an embodiment, when the temperature of the at least one front brake disc 251 is less than or equal to a first preset temperature and the temperature of the at least one rear brake disc 252 is less than or equal to the first preset temperature, the controller 22 is configured to control the front actuator 231 to increase the braking force output in response to an average temperature of the front brake disc 251 being less than an average temperature of the rear brake disc 252; or the controller 22 is configured to increase the braking force output of the rear actuator 232 in response to an average temperature of the front brake disc 251 being greater than an average temperature of the rear brake disc 252.

In an embodiment, when the temperature of the at least one front brake disc 251 is greater than a second preset temperature and the temperature of the at least one rear brake disc 252 is greater than or equal to the second preset temperature, the controller 22 is configured to reduce the braking force output of the front actuator 231 in response to an average temperature of the front brake disc 251 being greater than or equal to an average temperature of the rear brake disc 252; or the controller 22 is configured to reduce the braking force output of the rear actuator 232 in response to an average temperature of the front brake disc 251 being less than an average temperature of the rear brake disc 252.

When braking force output by one actuator of the braking system 20 suddenly change, the braking force output by the four actuators of the electric vehicle 10 is different in magnitude. In this case, a vehicle body of the electric vehicle 10 is unstable, and the electric vehicle 10 has a risk of slipping and rollover. Therefore, the braking system 20 provided in this embodiment simultaneously changes braking force output by two front actuators 231 or simultaneously changes braking force output by two rear actuators 232, to improve stability of the vehicle body of the electric vehicle 10 in a braking process.

In an embodiment, the controller 22 controls the left front actuator 2311 and the right rear actuator 2322 to increase the braking force output in response to a temperature of the left front brake disc 25 or the right rear brake disc 25 being less than or equal to the first preset value. In an embodiment, the controller 22 controls the left front actuator 2311 and the right rear actuator 2322 to reduce the braking force output in response to a temperature of the left front brake disc 2511 or the right rear brake disc 2522 being greater than or equal to the second preset value.

For example, a first preset temperature is 0 degrees Celsius. If a temperature of the left front brake disc 2511 is -20 degrees Celsius in a braking process of the electric vehicle 10, the control signal 60 is used to control the left front actuator 2311 and the right rear actuator 2322 to increase the braking force output.

For example, a second preset temperature is 300 degrees Celsius. If a temperature of the right rear brake disc 2522 is 500 degrees Celsius in a braking process of the electric vehicle 10, the control signal 60 is used to control the left front actuator 2311 and the right rear actuator 2322 to reduce the braking force output.

In an embodiment, the controller 22 controls the right front actuator 2312 and the left rear actuator 2321 to increase the braking force output in response to a temperature of the right front brake disc 2512 or the left rear brake disc 2521 being less than or equal to the first preset value. In an embodiment, the controller 22 controls the right front actuator 23 and the left rear actuator 2321 to reduce the braking force output in response to a temperature of the right front brake disc 2512 or the left rear brake disc 2521 being greater than or equal to the second preset value.

For example, a first preset temperature is 0 degrees Celsius. If a temperature of the right front brake disc 2512 is -20 degrees Celsius in a braking process of the electric vehicle 10, the control signal 60 is used to control the right front actuator 2312 and the left rear actuator 2321 to increase the braking force output.

For example, a second preset temperature is 300 degrees Celsius. If a temperature of the right front brake disc 2512 is 500 degrees Celsius in a braking process of the electric vehicle 10, the control signal 60 is used to control the right front actuator 2312 and the left rear actuator 2321 to reduce the braking force output.

In an embodiment, the controller 22 controls the rear actuator 232 to increase the braking force output in response to an average temperature of the front brake disc 251 being greater than or equal to an average temperature of the rear brake disc 252 and the average temperature of the rear brake disc 252 being less than or equal to the first preset temperature value. In an embodiment, the controller 22 controls the front actuator 231 to reduce the braking force output in response to an average temperature of the front brake disc 251 being greater than or equal to an average temperature of the rear brake disc 252 and the average temperature of the front brake disc 251 being greater than or equal to the second preset temperature value.

In an embodiment, the controller 22 controls the rear actuator 232 to increase the braking force output in response to an average temperature of the front brake disc 251 being less than an average temperature of the rear brake disc 252 and the average temperature of the front brake disc 251 being less than or equal to the first preset temperature value. The controller 22 controls the rear actuator 232 to reduce the braking force output in response to an average temperature of the front brake disc 12 being less than an average temperature of the rear brake disc 12 and the average temperature of the rear brake disc 12 being greater than or equal to the second preset temperature value.

For example, the second preset temperature value is 300 degrees Celsius. The average temperature of the front brake disc 251 of the electric vehicle 10 is greater than the average temperature of the rear brake disc 252, and the average temperature of the front brake disc 251 is greater than 300 degrees Celsius. The temperature of the front brake disc 251 is too high, and the controller 22 controls the front actuator 231 to reduce the braking force output.

For example, the second preset temperature value is 300 degrees Celsius. The average temperature of the rear brake disc 252 of the electric vehicle 10 is greater than the average temperature of the front brake disc 251, and the average temperature of the front brake disc 251 is less than 10 degrees Celsius. The controller 22 controls the front actuator 231 to increase the braking force output.

The braking system 20 provided in this embodiment of this application is configured to adjust braking force allocation of the front actuator 231 and the rear actuator 232 based on the average temperature of the front brake disc 251 or the rear brake disc 252. The braking system 20 properly allocates braking force of the front actuator 231 and the rear actuator 232 of the electric vehicle, so that the front brake disc 251 and the rear brake disc 252 of the electric vehicle can have a more uniform temperature and operate in a temperature range with a higher friction coefficient. Therefore, the braking system 20 can improve braking performance and braking efficiency of the electric vehicle 10, and improve driving comfort and safety of the electric vehicle 10.

In an embodiment, the controller 22 controls the front actuator 231 to reduce the braking force output in response to a temperature of a brake disc with a highest temperature being greater than or equal to a second preset temperature threshold and the brake disc with the highest temperature being the front brake disc 251.

In an embodiment, the controller 22 controls the rear actuator 232 to reduce the braking force output in response to a temperature of a brake disc with a highest temperature being greater than or equal to a second preset temperature threshold and the brake disc with the highest temperature being the rear brake disc 252.

In an embodiment, the controller 22 controls the front actuator 231 to increase the braking force output in response to a temperature of a brake disc with a highest temperature being less than a second preset temperature threshold and a temperature of a brake disc with a lowest temperature being less than or equal to a first preset temperature threshold and the brake disc with the lowest temperature being the front brake disc 251.

In an embodiment, the controller 22 controls the rear actuator 232 to increase the braking force output in response to a temperature of a brake disc with a highest temperature being less than a second preset temperature threshold and a temperature of a brake disc with a lowest temperature being less than or equal to a first preset temperature threshold and the brake disc with the lowest temperature being the left rear brake disc 2521 or the right rear brake disc 2522.

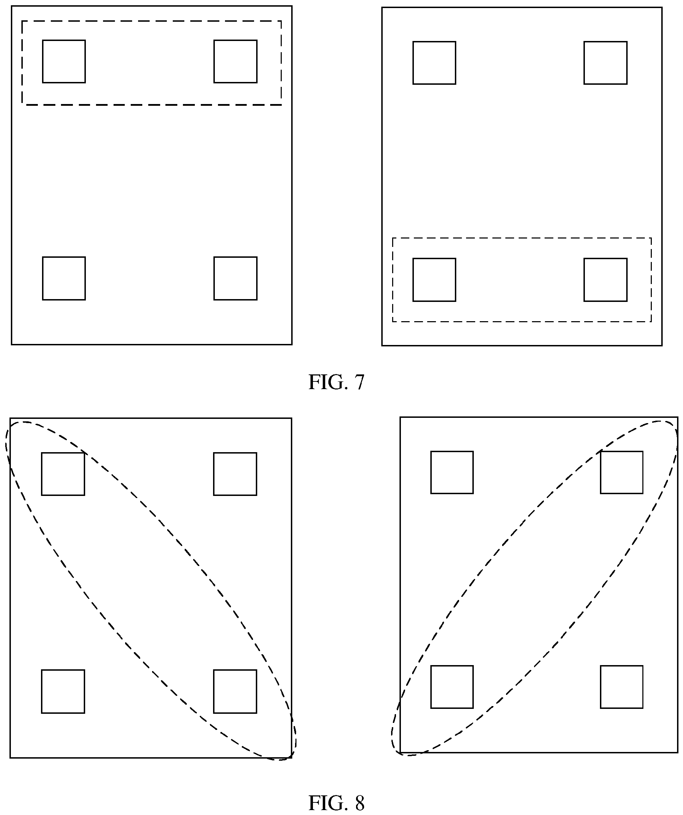

FIG. 7 and FIG. 8 each are a schematic diagram of control of the braking system 20. In a braking process of the electric vehicle 10, to stabilize the vehicle body and keep the electric vehicle 10 in a normal moving state, the braking system 20 simultaneously controls braking force changes on a left brake disc and a right brake disc of the electric vehicle 10. A left brake disc and a right brake disc of the electric vehicle 10 form one shaft of the braking system 20. Therefore, the braking system 20 includes a first shaft and a second shaft. In an embodiment, as shown in FIG. 7, the braking system 20 is an I-type control architecture, the first shaft includes two front brake discs 251, and the second shaft includes two rear brake discs 252. In an embodiment, as shown in FIG. 8, the braking system 20 is an X-type control architecture, the first shaft includes a left front brake disc 2511 and a right rear brake disc 2522, and the second shaft includes a right front brake disc 2512 and a left rear brake disc 2521.

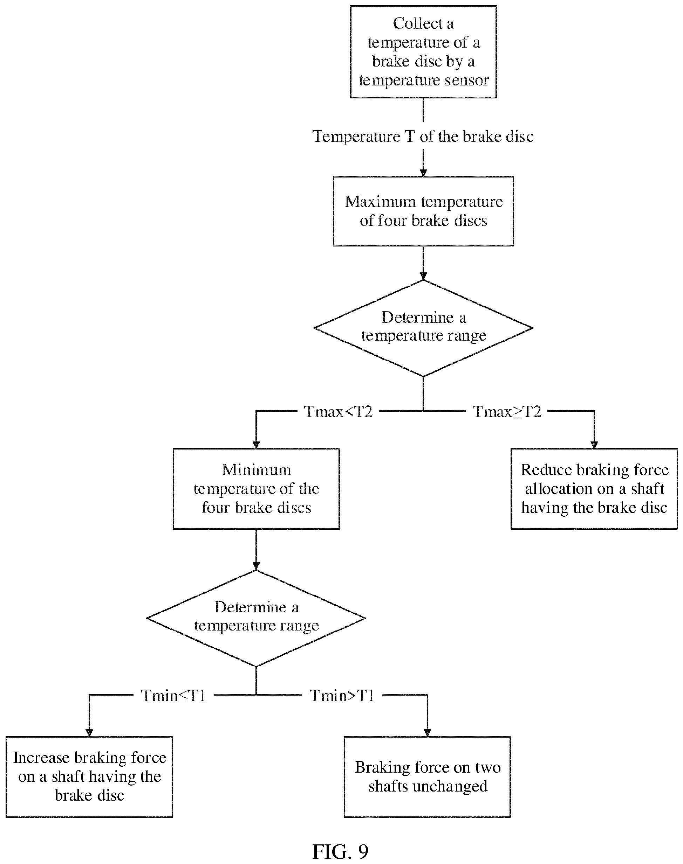

FIG. 9 is a schematic diagram of running of the braking system 20 according to an embodiment of this application. As shown in FIG. 9, a temperature sensor 261 collects temperatures of four brake discs 25, a temperature of a brake disc with a highest temperature in the four brake discs 25 is Tmax, and a temperature of a brake disc with a lowest temperature is Tmin.

In an embodiment, the controller 22 controls two actuators of a shaft having the brake disc with the highest temperature to reduce the braking force output in response to Tmax being greater than or equal to the second preset value. The controller 22 controls two actuators of a shaft having the brake disc with the lowest temperature to increase the braking force output in response to Tmax being less than the second preset value and Tmin being less than or equal to the first preset value. The controller 22 controls braking force output by the four actuators to keep unchanged in response to Tmax being less than the second preset value and Tmin being greater than the first preset value.

For example, the brake disc with the highest temperature is a left front brake disc 2511, and a temperature of the left front brake disc is greater than the second preset value. If the braking system 20 is in an I-type control architecture, the controller 22 is configured to control the left front actuator 2311 and the right front actuator 2312 to reduce the braking force output. If the braking system 20 is an X-type control architecture, the controller 22 is configured to control the left front actuator 2311 and the right rear actuator 2322 to reduce the braking force output.

For example, a temperature of the brake disc with the highest temperature is less than the second preset value, a temperature of the brake disc with the lowest temperature is less than the first preset value, and the brake disc with the lowest temperature is a right front brake disc 2512. If the braking system 20 is an I-type control architecture, the controller 22 is configured to control the left front brake disc 2511 and the right front brake disc 2512 to increase the braking force output. If the braking system 20 is an X-type control architecture, the controller 22 is configured to control the left rear brake disc 2521 and the right front brake disc 2512 to increase the braking force output.

According to the braking system 20 provided in this embodiment of this application, when the temperature of the brake disc 25 is too high, braking force output of an actuator corresponding to the brake disc with the too high temperature can be reduced, or when the temperature of the brake disc 25 is too high, braking force output of an actuator corresponding to the brake disc with the too low temperature can be increased, so that the brake disc 25 runs in a temperature range with a higher friction coefficient. Therefore, the braking system 20 can improve braking performance of the electric vehicle 10, and can improve reliability and service life of the brake disc 25.

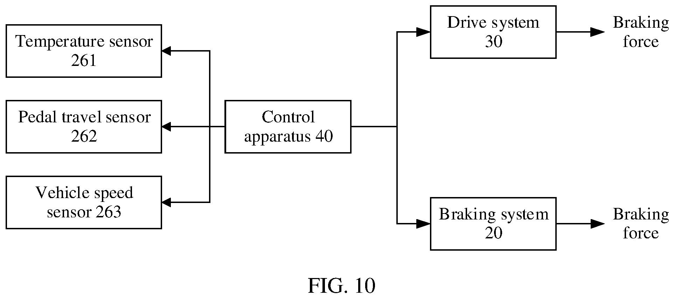

FIG. 10 is a schematic diagram of a control apparatus 40 according to an embodiment of this application. As shown in FIG. 10, a vehicle speed sensor 263 is configured to collect a driving speed parameter of an electric vehicle 10, and a temperature sensor 261 is configured to collect temperature parameters of four brake discs of the electric vehicle 10.

The control apparatus 40 is configured to: when the electric vehicle 10 runs in a braking state, send a control signal to a drive system 30 and a braking system 20 based on temperature distribution of the brake disc of the electric vehicle 10, to adjust braking force allocation of the electric vehicle 10. A vehicle control unit 50 receives a vehicle speed signal from the vehicle speed sensor 363 and generates a vehicle braking signal 90. The vehicle braking signal 90 indicates total braking force output by the drive system 30 and the braking system 20. The control apparatus 40 receives the vehicle braking signal 90, and generates a control signal 70 of the drive system and a control signal 80 of the braking system based on the temperature signal of the brake disc from the temperature sensor 361.

The control signal 70 of the drive system is configured to control braking force output by the drive system 30. Specifically, a motor controller 32 is configured to receive the control signal 70 of the drive system and control the drive motor 31 to run in a power generation state, to output reverse torque to a wheel 11 connected to the drive motor 31.

The control signal 80 of the braking system includes four control signals, and the four control signals are respectively used to control the four actuators 23 to output braking force.

In an embodiment, the control apparatus 40 outputs the control signal 70 of the drive system to control the drive system to reduce braking force output in response to a temperature of a brake disc 25 corresponding to at least one wheel 11 connected to the drive motor 31 being less than or equal to a first preset value. The motor controller 32 is configured to receive the control signal 70 of the drive system and control the drive motor 31 to reduce the braking force output. The control apparatus 40 outputs a control signal 80 of the drive system to control the drive system 30 to increase braking force output in response to a temperature of a brake disc 25 corresponding to at least one wheel 11 connected to the drive motor 31 being greater than or equal to a second preset value. The motor controller 32 is configured to receive the control signal 80 of the drive system and control the drive motor 31 to increase the braking force output.

In an embodiment, the electric vehicle 10 is a front-drive electric vehicle, the drive motor 31 is a front-drive motor, and the drive motor 31 is connected to two front wheels 111 of the electric vehicle 10. When the electric vehicle 10 runs in a braking state, and a temperature of at least one front brake disc 251 is less than the first preset value, the control apparatus 40 is configured to control the drive system 30 to reduce and increase the braking braking force output. When the electric vehicle 10 runs in a braking state, and a temperature of at least one front brake disc 251 is greater than the second preset value, the control apparatus 40 is configured to control the drive system 30 to reduce the braking force output.

In an embodiment, the electric vehicle 10 is a rear-drive electric vehicle, the drive motor 31 is a rear-drive motor, and the drive motor 31 is connected to two rear wheels 112 of the electric vehicle 10. When the electric vehicle 10 runs in a braking state, and a temperature of at least one rear brake disc 252 is less than the first preset value, the control apparatus 40 is configured to control the drive system 30 to reduce and increase the braking braking force output. When the electric vehicle 10 runs in a braking state, and a temperature of at least one rear brake disc 252 is greater than the second preset value, the control apparatus 40 is configured to control the drive system 30 to reduce the braking force output.

In an embodiment, the drive system 30 is a distributed drive system. The drive system 30 includes four drive motors 31. The four drive motors 31 are respectively connected to four wheels of the electric vehicle. The control apparatus 40 is configured to: when the electric vehicle 10 is in a braking state, control the drive system 30 to reduce braking force output of a drive motor 31 connected to a wheel 11 corresponding to a brake disc 25 whose temperature is less than or equal to the first preset value. The control apparatus 40 is configured to: when the electric vehicle 10 is in a braking state, control the drive system 30 to increase braking force output of a drive motor 31 connected to a wheel 11 corresponding to a brake disc 25 whose temperature is greater than or equal to the second preset value.

The control apparatus 40 provided in this embodiment of this application controls the braking force output of the drive system by outputting the control signal 70 of the drive system. When the temperature of the brake disc corresponding to the wheel connected to the drive system 30 is too high, the braking force output by the drive system is increased. However, because a sum of the braking force output by the drive system 30 and the braking system 20 is specific, the braking force of the braking system 20 is reduced, friction on the brake disc 25 of the electric vehicle is also reduced, and a temperature rise speed of the brake disc 25 is reduced. This prevents a problem like braking performance deterioration of the braking system 20 caused by a too high temperature of the brake disc. When the temperature of the brake disc corresponding to the wheel 11 connected to the drive system 30 is too low, the braking force output by the drive system 30 is reduced, the braking force provided by the corresponding braking system 20 is increased, the friction on the brake disc 25 of the electric vehicle is also increased, and the temperature rise speed of the brake disc 25 is increased, so that the brake disc operates in a range with a higher friction coefficient. Therefore, the control apparatus 40 provided in this embodiment of this application can improve the braking performance of the electric vehicle 10, and improve service life and reliability of the brake disc 25.

In an embodiment, the control apparatus 40 controls a front actuator 231 to increase the braking force output in response to the temperature of the at least one front brake disc 251 being less than or equal to the first preset value. In an embodiment, the control apparatus 40 controls a front actuator 231 to reduce the braking force output in response to the temperature of the at least one front brake disc 251 being greater than or equal to the second preset value.

In an embodiment, the control apparatus 40 controls a rear actuator 232 to increase the braking force output in response to the temperature of the at least one rear brake disc 252 being less than or equal to the first preset value. In an embodiment, the control apparatus 40 controls a rear actuator 232 to reduce the braking force output in response to the temperature of the at least one rear brake disc 252 being greater than or equal to the second preset value.

In an embodiment, the control apparatus 40 controls a left front actuator 2311 and a right rear actuator 2322 to increase the braking force output in response to a temperature of a left front brake disc 2511 or a right rear brake disc 2522 being less than or equal to the first preset value. In an embodiment, the control apparatus 40 controls a left front actuator 2312 and a right rear actuator 2321 to reduce the braking force output in response to a temperature of a right front brake disc 2512 or a left rear brake disc 2521 being greater than or equal to the second preset value.

In an embodiment, the control apparatus 40 controls a right front actuator 2312 and a left rear actuator 2321 to increase the braking force output in response to a temperature of a right front brake disc 2512 or a left rear brake disc 2521 being less than or equal to the first preset value. In an embodiment, the control apparatus 40 controls a right front actuator 2312 and a left rear actuator 2321 to reduce the braking force output in response to a temperature of a right front brake disc 2512 or a left rear brake disc 2521 being less than or equal to the second preset value.

In an embodiment, the control apparatus 40 is integrated in the vehicle control unit 51.

In an embodiment, the control apparatus 40 is an electronic control unit (ECU) integrated in the braking system.

Implementations of this application are described above. The foregoing descriptions are examples, not exhaustive, and not limited to the foregoing disclosed implementations. Many modifications and variations are apparent to a person of ordinary skill in the art without departing from the scope and spirit of the described implementations. Selection of terms used in this specification is intended to best explain implementation principles, actual application or improvements to technologies in the market, or to enable another person of ordinary skill in the art to understand the implementations disclosed in this specification.

## Claims

1. A braking system for an electric vehicle, wherein the braking system comprises a controller and four actuators, each actuator comprises a brake disc, four brake discs comprise two front brake discs and two rear brake discs, the two front brake discs comprise a left front brake disc and a right front brake disc, the two rear brake discs comprise a left rear brake disc and a right rear brake disc, the controller is configured to receive a braking signal of the braking system and output four control signals, the braking signal of the braking system indicates total braking force output by the braking system, the four control signals are respectively used to control the four actuators to output braking force, and the braking system is configured to adjust, based on temperatures of the four brake discs, the braking force output by the four actuators, wherein
the controller is configured to control an actuator corresponding to a brake disc whose temperature is less than or equal to a first preset value to increase braking force output, wherein a sum of the braking force output by the four actuators is equal to the total braking force indicated by the braking signal of the braking system; or
the controller is configured to control an actuator corresponding to a brake disc whose temperature is greater than or equal to a second preset value to reduce braking force output, wherein a sum of the braking force output by the four actuators is equal to the total braking force indicated by the braking signal of the braking system.

2. The braking system according to claim 1, wherein actuators corresponding to the two front brake discs are front actuators, the braking system is configured to adjust, based on a temperature of the front brake disc, braking force output by the front actuator, and the controller is configured to:
control the front actuator to increase the braking force output in response to a temperature of at least one front brake disc being less than or equal to the first preset value; or
control the front actuator to reduce the braking force output in response to a temperature of at least one front brake disc being greater than or equal to the second preset value.

3. The braking system according to claim 1 or 2, wherein actuators corresponding to the two rear brake discs are rear actuators, and the controller is configured to:
control the rear actuator to increase the braking force output in response to a temperature of at least one rear brake disc being less than or equal to the first preset value; or
control the rear actuator to reduce the braking force output in response to a temperature of at least one rear brake disc being greater than or equal to the second preset value.

4. The braking system according to any one of claims 1 to 3, wherein the left front brake disc and the right rear brake disc respectively correspond to a left front actuator and a right rear actuator, and the controller is configured to:
control the left front actuator and the right rear actuator to increase the braking force output in response to a temperature of the left front brake disc or the right rear brake disc being less than or equal to the first preset value; or
control the left front actuator and the right rear actuator to reduce the braking force output in response to a temperature of the right front brake disc or the left rear brake disc being greater than or equal to the second preset value.

5. The braking system according to any one of claims 1 to 4, wherein the right front brake disc and the left rear brake disc respectively correspond to a right front actuator and a left rear actuator, and the controller is configured to:
control the right front actuator and the left rear actuator to increase the braking force output in response to the temperature of the right front brake disc or the left rear brake disc being less than or equal to the first preset value; or
control the right front actuator and the left rear actuator to reduce the braking force output in response to the temperature of the right front brake disc or the left rear brake disc being less than or equal to the second preset value.

6. A control apparatus for an electric vehicle, wherein the electric vehicle comprises a drive system, and the drive system comprises at least one drive motor and at least one motor controller; and the motor controller is configured to control the drive motor to output driving force in response to the electric vehicle running in a driving state; or the motor controller is configured to control the drive motor to output braking force to a wheel connected to the drive motor in response to the electric vehicle running in a braking state; and
the electric vehicle comprises a braking system, the braking system comprises four actuators, each actuator comprises a brake disc, the four actuators are configured to output the braking force, four brake discs comprise two front brake discs and two rear brake discs, the two front brake discs comprise a left front brake disc and a right front brake disc, the two rear brake discs comprise a left rear brake disc and a right rear brake disc, and the four brake discs respectively correspond to four wheels of the electric vehicle, wherein
the control apparatus is configured to:
output a control signal of the drive system to control the drive system to reduce braking force output in response to a temperature of a brake disc corresponding to at least one wheel connected to the drive motor being less than or equal to a first preset value, wherein the motor controller is configured to receive the control signal of the drive system and control the drive motor to reduce the braking force output; or
output a control signal of the drive system to control the drive system to increase braking force output in response to a temperature of a brake disc corresponding to at least one wheel connected to the drive motor being greater than or equal to a second preset value, wherein the motor controller is configured to receive the control signal of the drive system and control the drive motor to increase the braking force output.

7. The control apparatus according to claim 6, wherein the drive system comprises a front-drive motor, the front-drive motor is connected to two front wheels of the electric vehicle, and the control apparatus is configured to:
control the drive system to reduce the braking force output in response to a temperature of at least one front brake disc being less than or equal to the first preset value; or
control the drive system to increase the braking force output in response to a temperature of at least one front brake disc being greater than or equal to the second preset value.

8. The control apparatus according to claim 6, wherein the drive system comprises a rear-drive motor, the rear-drive motor is connected to two rear wheels of the electric vehicle, and the control apparatus is configured to:
control the drive system to reduce the braking force output in response to a temperature of at least one rear brake disc being less than or equal to the first preset value; or
control the drive system to increase the braking force output in response to a temperature of at least one rear brake disc being greater than or equal to the second preset value.

9. The control apparatus according to claim 6, wherein the drive system comprises four drive motors, the four drive motors are respectively connected to the four wheels of the electric vehicle, and the control apparatus is configured to:
control the drive system to reduce the braking force output of the drive motor connected to the wheel corresponding to the brake disc whose temperature is less than or equal to the first preset value; or
control the drive system to increase the braking force output of the drive motor connected to the wheel corresponding to the brake disc whose temperature is greater than or equal to the second preset value.

10. The control apparatus according to any one of claims 6 to 9, wherein the control apparatus is configured to receive a vehicle braking signal and output a control signal of the braking system, the vehicle braking signal indicates total braking force output by the drive system and the braking system, the control signal of the braking system comprises four actuator control signals, and the four actuator control signals are respectively used to control the four actuators to output the braking force; and
the control apparatus is configured to adjust, based on temperatures of the four brake discs when the electric vehicle runs in the braking state, braking force output by the drive system and the braking system, wherein a sum of the braking force output by the drive system and the braking system is equal to the total braking force indicated by the vehicle braking signal.

11. The control apparatus according to claim 10, wherein actuators corresponding to the two front brake discs are front actuators, and the control apparatus is configured to:
control the front actuator to increase the braking force output in response to the temperature of the at least one front brake disc being less than or equal to the first preset value; or
control the front actuator to reduce the braking force output in response to the temperature of the at least one front brake disc being greater than or equal to the second preset value.

12. The control apparatus according to claim 10, wherein actuators corresponding to the two rear brake discs are rear actuators, and the control apparatus is configured to:
control the rear actuator to increase the braking force output in response to the temperature of the at least one rear brake disc being less than or equal to the first preset value; or
control the rear actuator to reduce the braking force output in response to the temperature of the at least one rear brake disc being greater than or equal to the second preset value.

13. The control apparatus according to claim 10, wherein the control apparatus is configured to:
control an actuator corresponding to the brake disc whose temperature is less than or equal to the first preset value to increase the braking force output; or
control an actuator corresponding to the brake disc whose temperature is greater than or equal to the second preset value to reduce the braking force output.

14. The control apparatus according to claim 10, wherein the left front brake disc and the right rear brake disc respectively correspond to a left front actuator and a right rear actuator, and the control apparatus is configured to:
control the left front actuator and the right rear actuator to increase the braking force output in response to a temperature of the left front brake disc or the right rear brake disc being less than or equal to the first preset value; or
control the left front actuator and the right rear actuator to reduce the braking force output in response to a temperature of the right front brake disc or the left rear brake disc being greater than or equal to the second preset value.

15. The control apparatus according to claim 10, wherein the right front brake disc and the left rear brake disc respectively correspond to a right front actuator and a left rear actuator, and the control apparatus is configured to:
control the right front actuator and the left rear actuator to increase the braking force output in response to a temperature of the right front brake disc or the left rear brake disc being less than or equal to the first preset value; or
control the right front actuator and the left rear actuator to reduce the braking force output in response to a temperature of the right front brake disc or the left rear brake disc being less than or equal to the second preset value.

16. An electric vehicle, wherein the electric vehicle comprises the braking system according to any one of claims 1 to 5 or comprises the control apparatus according to any one of claims 6 to 15.
